Europäisches Patentamt

**European Patent Office**

**Office européen des brevets**

(19)

(11) Veröffentlichungsnummer: **0 063 297**
**B1**

(12) **EUROPÄISCHE PATENTSCHRIFT**

(45) Veröffentlichungstag der Patentschrift:
14.08.85

(51) Int. Cl.⁴: **H 01 B 3/22, H 01 G 4/22**

(21) Anmeldenummer: **82102883.4**

(22) Anmeldetag: **05.04.82**

(54) **Imprägniermittel und seine Verwendung.**

(30) Priorität: **16.04.81 DE 3115545**

(43) Veröffentlichungstag der Anmeldung:
**27.10.82 Patentblatt 82/43**

(45) Bekanntmachung des Hinweises auf die Patenterteilung:
**14.08.85 Patentblatt 85/33**

(84) Benannte Vertragsstaaten:
**AT BE DE FR GB IT NL SE**

(56) Entgegenhaltungen:
**EP - A - 0 010 363**
**DE - A - 2 703 745**
**DE - A - 2 718 905**
**DE - A - 2 726 015**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Klein, Alfons, Ing.-grad., Virchowstrasse 9, D-4000 Düsseldorf (DE)**
Erfinder: **Wedemeyer, Karlfried, Dr., Bilharzstrasse 7, D-5000 Köln 80 (DE)**
Erfinder: **Havenith, Lothar, Dr., Schleiermacherstrasse 21, D-5090 Leverkusen 1 (DE)**
Erfinder: **Kron, Rudolf, Ing.-grad., Burgweg 12, D-5090 Leverkusen 1 (DE)**

**Beschreibung**

Die Erfindung betrifft Zusammensetzungen mit vorteilhaften dielektrischen Eigenschaften, die als Imprägniermittel in elektrischen Vorrichtungen verwendet werden können.

Aus der DE-OS 2 718 905 sind Kondensatoren bekannt, die 80 bis 99 Gew.-% monoalkylierte und 20 bis 1 Gew.-% dialkylierte Diphenylether enthalten. Die Diphenylether entsprechend der DE-OS 2 718 905 können nur durch Ethyl-, Propyl- und Butylreste substituiert sein. Methylsubstituierte Diphenylether werden in ihrer Anwendung als Imprägniermittel als nicht akzeptabel angesehen (DE-OS 2 718 905, Seite 8, Zeilen 20 bis 22). Bevorzugt enthalten die in der Offenlegungsschrift beschriebenen dielektrischen Flüssigkeiten Anteile an einem Antioxidationsmittel und an einem Wasserstoffakzeptor.

In der DE-OS 27 03 745 werden Chlordiphenylether, die in Ortho-Stellung zum Ethersauerstoff chloriert sind, als Dielektrika für Kondensatoren beschrieben. Diese Verbindungen, die auch im Gemisch eingesetzt werden können, zeigen eine starke Kristallisationsneigung bei niedrigen Temperaturen.

In der JA 132 354/73 werden reine Alkyldiphenylether, darunter auch der o,o'- und der p,p'-Ditolylether, genannt.

Es wurden neue Zusammensetzungen mit dielektrischen Eigenschaften auf Basis von alkylierten Diphenylethern gefunden, die ein Isomerengemisch von Ditolylethern enthalten.

Die erfindungsgemässen Ditolylether-Isomerengemische zeigen gegenüber den reinen Verbindungen günstigere Dielektrizitätszahlen und Verlustkonstanten. Die erfindungsgemässen Ditolylethergemische können als Para/Para'-, Meta/Meta'-, Ortho/Ortho'-, Para/Ortho'-, Para/Meta'- und Ortho/Meta'-Isomere vorliegen.

Die erfindungsgemässen Ditolylether sind an sich bekannt und können nach bekannten Verfahren hergestellt werden CH.Z. 35, 486 (1911).

Beispielsweise ist es möglich, die erfindungsgemässen Ditolylether durch Umsetzung von Kresol-Alkalimetall-Verbindungen mit Halogentoluolen gegebenenfalls unter Katalyse von Kupfer oder Kupfersalzen, herzustellen. (J. Pharm. Sc. Japan 57 [1937] 391 bis 396).

Besonders bevorzugt werden Ditolylethergemische, die bei der Hydrolyse von Chlortoluolen anfallen (Ing. Eng. Chem. 38, (1946), Seiten 254 bis 261).

Beispielsweise können die Isomerengemische die folgenden Anteile an Hauptbestandteilen enthalten:

26 bis 34 Gew.-% 2,3'-Ditolylether,
4 bis 8 Gew.-% 2,2'-Ditolylether,
10 bis 18 Gew.-% 2,4'-Ditolylether,
18 bis 28 Gew.-% 3,3'-Ditolylether,
17 bis 25 Gew.-% 3,4'-Ditolylether,
4 bis 8 Gew.-% 4,4'-Ditolylether.

Es ist jedoch auch möglich, Ditolylether-Gemische zu verwenden, deren Anteile an Isomeren mit zweiständigen Methylgruppen wesentlich geringer ist. Beispielsweise haben diese Isomerengemische die folgende Zusammensetzung:

0 bis 5 Gew.-% 2,3'-Ditolylether,
0 bis 4 Gew.-% 2,2'-Ditolylether,
13 bis 23 Gew.-% 2,4'-Ditolylether,
42 bis 52 Gew.-% 3,3'-Ditolylether,
26 bis 36 Gew.-% 3,4'-Ditolylether,
2 bis 9 Gew.-% 4,4'-Ditolylether.

Es können aber auch Ditolylether-Gemische verwendet werden, in denen bestimmte Isomeren stark überwiegen. Beispielsweise sollen die folgenden Zusammensetzungen genannt werden:

58 bis 77 Gew.-% 2,3'-Ditolylether,
15 bis 30 Gew.-% 2,2'-Ditolylether,
5 bis 14 Gew.-% 2,4'-Ditolylether,

oder

2 bis 6 Gew.-% 2,4'-Ditolylether,
58 bis 77 Gew.-% 3,3'-Ditolylether,
19 bis 33 Gew.-% 3,4'-Ditolylether,
0 bis 3 Gew.-% 4,4'-Ditolylether,

oder

3 bis 7 Gew.-% 3,3'-Ditolylether,
60 bis 83 Gew.-% 3,4'-Ditolylether,
15 bis 28 Gew.-% 4,4'-Ditolylether.

Es ist auch möglich, Ditolylether-Gemische zu verwenden, die als Nebenprodukte bei der Hydrolyse von reinem o-Chlortoluol entstehen. Solche Isomerengemische können beispielsweise wie folgt zusammengesetzt sein:

0 bis 2 Gew.-% 2,4'-Ditolylether,
15 bis 31 Gew.-% 2,2'-Ditolylether,
40 bis 70 Gew.-% 2,3'-Ditolylether,
15 bis 25 Gew.-% 3,3'-Ditolylether,
0 bis 2 Gew.-% 3,4'-Ditolylether.

Bei der Hydrolyse von reinem p-Chlortoluol können beispielsweise erfindungsgemäss Ditolylether der folgenden Zusammensetzung erhalten werden:

19 bis 38 Gew.-% 4,4'-Ditolylether,
33 bis 63 Gew.-% 3,4'-Ditolylether,
15 bis 25 Gew.-% 3,3'-Ditolylether,
0 bis 2 Gew.-% 2,2'-Ditolylether,
0 bis 2 Gew.-% 2,3'-Ditolylether,
0 bis 2 Gew.-% 2,4'-Ditolylether.

Die erfindungsgemässen Zusammensetzungen können zusätzlich stabilisierend wirkende Zusätze enthalten, insbesondere Säureakzeptoren und Oxidationsinhibitoren.

Als Säureakzeptoren werden Epoxidverbindungen bevorzugt. Beispielsweise seien die folgenden Epoxidverbindungen genannt: 1,2-Epoxy-3-phenoxypropan, Bis-(3,4-Epoxy-6-methylcyclohexylmethyl)-adipat, 1-Epoxy-ethyl-3,4-epoxy-cyclohexan, 3,4-Epoxy-cyclohexan, 3,4-Epoxy-cyclohexylmethyl -3,4- epoxy-cyclohexancarboxylat, 3,4-Epoxy -6- methylcyclohexylmethyl -3,4- epoxy -6- methylcyclohexancarboxylat und 2,2-Bis- (4-hydroxyphenyl) -propan-diglycidylether.

Im allgemeinen setzt man 0,1 bis 5 Gew.-%, vorzugsweise 0,3 bis 1 Gew.-%, der Epoxidverbindungen, bezogen auf die Gesamtmenge des flüssigen Dielektrikums, ein.

Als Oxidationsinhibitoren werden im allgemeinen aromatische carbocyclische Verbindungen mit zwei Hydroxygruppen bevorzugt. Beispielsweise seien die folgenden Oxidationsinhibitoren genannt: Di-tert.-amyl-hydrochinon, 2,2-Bis- (4-hydroxyphenyl) -propan und 4,4'-Butyliden-bis- (6-tert.- butyl -m- kresol). Die erfindungsgemässen Zusammensetzungen enthalten bevorzugt als Oxidationsinhibitor Di-tert.-amyl-hydrochinon.

Bevorzugte erfindungsgemässe Zusammensetzungen mit dielektrischen Eigenschaften können beispielsweise 90 bis 110 Gew.-Teile, besonders bevorzugt 95 bis 100 Gew.-Teile, des Ditolylether-Isomerengemischs, 0,05 bis 2,0 Gew.-Teile, bevorzugt 0,1 bis 1,0 Gew.-Teile, des Säureakzeptors und 0,05 bis 2,0 Gew.-Teile, insbesondere bevorzugt 0,1 bis 1,0 Gew.-Teile, des Oxidationsinhibitors enthalten.

Die erfindungsgemässen Zusammensetzungen können im allgemeinen durch Zusammengeben der Komponenten hergestellt werden.

Gegenstand der Erfindung ist ausserdem die Verwendung der erfindungsgemässen Zusammensetzung als Dielektrikum, besonders als Imprägnierungsmittel für elektrische Vorrichtungen. Als elektrische Vorrichtungen seien besonders Kondensatoren und Transformatoren genannt, insbesondere seien Kondensatoren mit einem Aufbau, bestehend aus mehrlagigem Papier und Aluminiumfolie, aus metallisiertem Papier, aus einer gegebenenfalls metallisierten Kunststoffolie, beispielsweise aus Polypropylen, Polycarbonat oder Polyterephthalsäureester, oder einem Mischdielektrikum, beispielsweise aus Papier, Kunststoff- und Aluminiumfolie oder aus metallisiertem Papier und Kunststoff-Folie genannt. Bevorzugt können die erfindungsgemässen Imprägniermittel für Kondensatoren, die als festes Dielektrikum Kunststoffolie enthalten, verwendet werden (all-film-Kondensatoren).

Gegenüber den aus der DE-OS 2 718 905 bekannten Diphenylethern weisen die erfindungsgemässen Zusammensetzungen mit dielektrischen Eigenschaften deutliche Vorteile auf. So haben die erfindungsgemässen Zusammensetzungen beispielsweise eine höhere Dielektrizitätskonstante und ein günstigeres Tieftemperatur-Viskositätsverhalten.

Daher können die erfindungsgemässen Zusammensetzungen überraschenderweise besonders vorteilhaft bei der Imprägnierung von Kondensatoren eingesetzt werden. Durch die höhere Dielektrizitätskonstante lassen die erfindungsgemässen Zusammensetzungen besonders vorteilhaft zur Imprägnierung von Kondensatoren mit einem Aufbau aus metallisiertem Papier verwenden.

Die erfindungsgemässen Zusammensetzungen mit dielektrischen Eigenschaften können leicht biologisch abgebaut werden und belasten daher die Umwelt nicht.

Die als Zusatzdielektrikum verwendete dielektrische Flüssigkeit sollte in Kondensatoren, die als festes Dielektrikum Kunststoffolie, meist eine oder mehrere Lagen Polypropylenfolie enthalten eine rasche und vollständige Imprägnierung der Wikkel gewährleisten. Während des Imprägniervorganges, der gewöhnlich bei niedriger Temperatur unter Vakuum durchgeführt wird, müssen alle Hohlräume und Spalten der diekeltrischen Wickel mit der dielektrischen Flüssigkeit ausgefüllt werden. Gemäss der US-PS 336 156 ist dabei die Verwendung eines flüssigen Imprägniermittels mit relativ hoher Viskosität problematisch und unerwünscht. Eine niedrige Viskosität des Imprägniermittels ist wünschenswert und erleichtert im allgemeinen das Eindringen über die Ränder des dielektrischen Wickels, die Ausbreitung in den zwischen den Belägen und dem festen Kunststoffdielektrikum bestehenden Spalten sowie eine vorteilhafte Durchdringung der Kunststoffolie.

Da die Viskosität mit fallender Temperatur zunimmt, werden die Eigenschaften der elektrischen Vorrichtungen, die mit einer Flüssigkeit hoher Viskosität imprägniert sind bei tiefen Temperaturen verschlechtert. Dabei können sich im flüssigen Dielektrikum bei tieferen Temperaturen kristalline oder amorphe Abscheidungen bilden und eine Inhomogenität des flüssigen Dielektrikums bewirken. Schliesslich kann das flüssige Dielektrikum bei tiefen Temperaturen durch Volumenabnahme schrumpfen und die Entstehung von Hohlräumen verursachen. Die Folge ist ein Temperaturanstieg und eine Verringerung der Durchschlagfestigkeit der dielektrischen Vorrichtung die schliesslich einen vorzeitigen, unerwünschten Ausfall herbeiführt.

Beispiele

Die überraschenden Eigenschaften der erfindungsgemässen dielektrischen Flüssigkeiten werden mit einem aus der DE-OS 2 718 905 bekannten Diphenylether verglichen.

Die dielektrische Flüssigkeiten A bis C im Rahmen der vorliegenden Erfindung haben die folgenden Zusammensetzung:

| Isomere | A | B | C |
|---|---|---|---|
| Unbekannte Verbindung | 0,8% | 0,3% | 0,3% |
| 2,2'-Dimethyl-diphenylether | 5,1% | – | 12,2% |
| 2,3'-Dimethyl-diphenylether | 26,9% | – | 58,2% |
| 2,4'-Dimethyl-diphenylether | 11,6% | 0,2% | 2,1% |
| 3,3'-Dimethyl-diphenylether | 26,9% | 8,1% | 25,8% |
| 3,4'-Dimethyl-diphenylether | 23,5% | 63,7% | 1,4% |
| 4,4'-Dimethyl-diphenylether | 5,2% | 27,6% | – |

D entspricht einem aus der DE-OS 2 718 905 bekannten Diphenylether mit der folgenden Zusammensetzung:

| | |
|---|---|
| Monoisopropyl-diphenyl-ether | 86,6 Gew.-% |
| Diisopropyl-diphenyl-ether | 13,4 Gew.-% |

Tabelle 1

| | A | B | C | D |
|---|---|---|---|---|
| Dielektrizitätszahl | | | | |
| DK | | | | |
| 20 °C | 3,60 | 3,82 | 3,30 | 3,18 |
| 90 °C | 3,20 | 3,32 | 2,96 | 2,85 |
| kinematische Viskosität ($mm^2.sec^{-1}$) | | | | |
| 20 °C | 5,8 | 5,2 | 6,1 | 7,8 |
| 0 °C | 14,3 | – | – | 20,7 |
| −10 °C | 25,2 | 19,2 | 30,0 | 41,8 |
| −25 °C | 77,0 | 62,6 | 111,5 | 204,9 |

**Patentansprüche**

1. Zusammensetzungen mit dielektrischen Eigenschaften auf Basis von alkylierten Diphenylethern, dadurch gekennzeichnet, dass sie als alkylierte Diphenylether ein Isomerengemisch von Ditolylethern enthalten.

2. Zusammensetzungen nach Anspruch 1, dadurch gekennzeichnet, dass sie zusätzlich einen Oxidationsinhibitor enthalten.

3. Zusammensetzungen nach Anspruch 2, dadurch gekennzeichnet, dass sie als Oxidationsinhibitor ein Hydrochinonderivat enthalten.

4. Zusammensetzungen nach Anspruch 1 oder 2, dadurch gekennzeichnet, dass sie zusätzlich einen Säureakzeptor enthalten.

5. Zusammensetzungen nach Anspruch 4, dadurch gekennzeichnet, dass sie als Säureakzeptor eine Epoxidverbindung enthalten.

6. Zusammensetzungen nach einem der Ansprüche 1 bis 5, dadurch gekennzeichnet, dass sie 90 bis 110 Gew.-Teile des Ditolylether-Isomerengemischs 0,05 bis 2,0 Gew.-Teile des Oxidationsinhibitors und 0,05 bis 2,0 Gew.-Teile des Säureakzeptors enthalten.

7. Zusammensetzungen nach einem der Ansprüche 1 bis 6, dadurch gekennzeichnet, dass sie als Epoxidverbindung 2,2-Bis-(4-hydroxyphenyl)-propandiglycidyl-ether und als Hydrochinonderivat Di-tert.-amyl-hydrochinon enthalten.

8. Verwendung der Zusammensetzungen mit dielektrischen Eigenschaften nach einem der Ansprüche 1 bis 7 als Dielektrikum in elektrischen Vorrichtungen.

**Revendications**

1. Compositions ayant des propriétés diélectriques à base de diphényléthers alkylés, caractérisées en ce qu'elles contiennent comme diphényléthers alkylés un mélange d'isomères de ditolyléthers.

2. Compositions selon la revendication 1, caractérisées en ce qu'elles contiennent en outre un inhibiteur d'oxydation.

3. Compositions selon la revendication 2, caractérisées en ce qu'elles contiennent comme inhibiteur d'oxydation un dérivé d'hydroquinone.

4. Compositions selon la revendication 1 ou 2, caractérisées en ce qu'elles contiennent en outre un accepteur d'acide.

5. Compositions selon la revendication 4, caractérisées en ce qu'elles contiennent comme accepteur d'acide un composé époxydé.

6. Compositions selon l'une des revendications 1 à 5, caractérisées en ce qu'elles contiennent 90 à 110 parties en poids du mélange d'isomères de ditolyléthers, 0,05 à 2,0 parties en poids de l'inhibiteur d'oxydation et 0,05 à 2,0 parties en poids de l'accepteur d'acide.

7. Compositions selon l'une des revendications 1 à 6, caractérisées en ce qu'elles contiennent comme composé époxydé l'éther diglycidylique du 2,2-bis-(4-hydroxyphényl)-propane et comme dérivé d'hydroquinone la di-tert.-amyl-hydroquinone.

8. Utilisation des compositions à propriétés diélectriques selon l'une des revendications 1 à 7 comme diélectrique dans des appareils électriques.

**Claims**

1. Compositions having dielectric properties and based on alkylated diphenyl ethers, characterised in that they contain an isomer mixture of ditolyl ethers as the alkylated diphenyl ethers.

2. Compositions according to Claim 1, characterised in that they additionally contain an oxidation inhibitor.

3. Compositions according to Claim 2, characterised in that they contain a hydroquinone derivative as the oxidation inhibitor.

4. Compositions according to Claim 1 or 2, characterised in that they additionally contain an acid acceptor.

5. Compositions according to Claim 4, characterised in that they contain an epoxide compound as the acid acceptor.

6. Compositions according to one of Claims 1 to 5, characterised in that they contain 90 to 110 parts by weight of the ditolyl ether isomer mixture, 0.05 to 2.0 parts by weight of the oxidation inhibitor and 0.05 to 2.0 parts by weight of the acid acceptor.

7. Compositions according to one of Claims 1 to 6, characterised in that they contain 2,2-bis-(4-hydroxyphenyl) -propane-diglycidyl ether as the epoxide compound and di-tert.-amyl-hydroquinone as the hydroquinone derivative.

8. Use of the compositions having dielectric properties according to one of Claims 1 to 7 as a dielectric in electrical devices.